# EUROPÄISCHE PATENTANMELDUNG

(11) **EP 4 082 711 A1**
(43) Veröffentlichungstag der Anmeldung: **02.11.2022**
(21) Anmeldenummer: 21171061.1
(22) Anmeldetag: 28.04.2021
(51) Int. Cl.: B23K 26/03, B23K 26/046, B23K 26/06, B23K 26/70

(54) **LASERBEARBEITUNGSMASCHINE UND VERFAHREN ZUR ÜBERWACHUNG EINES IM LASERSTRAHLENGANG ANGEORDNETEN OPTISCHEN ELEMENTS**

(71) Anmelder: TRUMPF Schweiz AG, 7214 Grüsch (CH)
(72) Erfinder: MARZENELL, Stefan, 7208 Malans (CH)
(74) Vertreter: Kohler Schmid Möbus Patentanwälte

(57) **Zusammenfassung**

Bei einer Laserbearbeitungsmaschine (1) zum Bearbeiten eines Werkstücks (2) mittels eines Laserstrahls (3) mit einem Laserstrahlerzeuger (4) zum Erzeugen des Laserstrahls (3), mit einem optischen Element (8), durch das hindurch der Laserstrahl (3) auf das Werkstück (2) gerichtet wird, mit einem Strahlteiler (9), der zwischen dem Laserstrahlerzeuger (4) und dem optischen Element (8) angeordnet ist, um rücklaufende Bildstrahlen (10, 16) von dem Strahlengang des einfallenden Laserstrahls (3) zu trennen, mit einem Detektor (11), der im Strahlgang der rücklaufenden Bildstrahlen (10, 16) dem Strahlteiler (9) nachgeordnet ist, mit einer Abbildungsoptik (12), die zwischen dem Strahlteiler (9) und dem Detektor (11) angeordnet ist, und mit einer Überwachungseinrichtung (18) zum Überwachen des optischen Elements (8) ist die Abbildungsoptik (12) zwischen einem ersten Schaltzustand, in dem das Werkstück (2) auf den Detektor (11) abgebildet wird, und einem zweiten Schaltzustand, in dem das optische Element (8) auf den Detektor (11) abgebildet wird, umschaltbar, wobei der Detektor (11) Teil der Überwachungseinrichtung (18) ist.

## Beschreibung

Die vorliegende Erfindung betrifft eine Laserbearbeitungsmaschine zum Bearbeiten eines Werkstücks mittels eines Laserstrahls mit einem Laserstrahlerzeuger zum Erzeugen des Laserstrahls, mit einem optischen Element, durch das hindurch der Laserstrahl auf das Werkstück gerichtet wird, mit einem Strahlteiler, der zwischen dem Laserstrahlerzeuger und dem optischen Element angeordnet ist, um rücklaufende Bildstrahlen von dem Strahlengang des einfallenden Laserstrahls zu trennen, mit einem Detektor, insbesondere einer Kamera, der im Strahlgang der rücklaufenden Bildstrahlen dem Strahlteiler nachgeordnet ist, mit einer Abbildungsoptik, die zwischen dem Strahlteiler und dem Detektor angeordnet ist, und mit einer Überwachungseinrichtung zum Überwachen des optischen Elements.

Solche Laserbearbeitungsmaschinen mit einer Schutzglasüberwachung sind hinlänglich bekannt, z.B. aus DE 103 10 854 B3, DE 10 2013 226 961 A1 und DE 10 2018 102 828 A1. Die Schutzglasüberwachung erfolgt dabei beispielsweise mittels einer separaten Beleuchtungsquelle oder mit einer zum Beobachten des Werkstücks vorgesehenen Kamera.

Bei der Laserbearbeitung werden Scanner, Linsen und Objektive eingesetzt. Zwischen diesen optischen Komponenten und dem Werkstück gibt es ein Schutzglas, das den Optikbereich und den Arbeitsbereich trennt. Bei der Laserbearbeitung kann es dazu kommen, dass Spritzer und Rauch sowie auch weitere Prozesse entstehen, die dazu führen können, dass das Schutzglas verschmutzt. Dort kann Leistung absorbiert werden, wodurch die Strahlqualität schlechter werden kann und das Schutzglas sich lokal erwärmen und beschädigt werden kann.

Bei bekannten Laserbearbeitungsmaschinen befinden sich zwischen Laserstrahlerzeuger und Scanner eine Kameraeinheit mit einer Fokussier- bzw. Abbildungsoptik (z.B. feste oder verschiebbare Fokussierlinse) und ein Strahlteiler, um das Werkstück während der Laserbearbeitung beobachten zu können. Die Fokussieroptik ist so ausgelegt, dass das Werkstück scharf auf die Kamera abgebildet wird. Dabei werden Scanner und Abbildungsoptiken mit einem Schutzglas als Abschluss zum Arbeitsraum mit dem Werkstück verwendet. Bei einer festen Fokussierlinse und je nach Scannerstellung wird das Bild auf der Kamera nicht immer scharf abgebildet. Deshalb ist die Fokussierlinse verschiebbar ausgeführt, um das Werkstück in der gesamten Bearbeitungsebene scharf abbilden zu können.

Der vorliegenden Erfindung stellt sich die Aufgabe, bei einer Laserbearbeitungsmaschine der eingangs genannten Art eine alternative Überwachungseinrichtung zur Überwachung des optischen Elements sowie ein zugehöriges Verfahren anzugeben.

Diese Aufgabe wird erfindungsgemäß dadurch gelöst, dass die Abbildungsoptik zwischen einem ersten Schaltzustand, in dem das Werkstück auf den Detektor abgebildet wird, und einem zweiten Schaltzustand, in dem das optische Element auf den Detektor abgebildet wird, umschaltbar ist und dass der Detektor Teil der Überwachungseinrichtung ist.

Erfindungsgemäß wird die vorhandene Abbildungsoptik dazu genutzt, die Beobachtungsebene, welche der Detektor scharf sieht, von der Ebene des Werkstücks, also vom Arbeitsabstand, in die Ebene des optischen Elements zu schalten. So kann das optische Element mittels des Detektors optisch überwacht werden, ohne dass das optische Element zum Detektor oder der Detektor zum optischen Element bewegt werden müssen.

In einer bevorzugten Ausführungsform der Erfindung weist die Abbildungsoptik eine zwischen dem ersten und dem zweiten Schaltzustand bewegbare Schaltoptik, wie z.B. eine Fokussierlinse, auf, die in einem der beiden Schaltzustände nicht in den Strahlengang der rücklaufenden Bildstrahlen eingreift und in dem anderen Schaltzustand in den Strahlengang der rücklaufenden Bildstrahlen eingreift. Dabei kann das Bewegen der Schaltoptik zwischen dem ersten und dem zweiten Schaltzustand durch Verdrehen oder Verschieben der Schaltoptik erfolgen.

In einer anderen bevorzugten Ausführungsform der Erfindung weist die Abbildungsoptik eine entlang des Strahlengangs der rücklaufenden Bildstrahlen zwischen dem ersten und dem zweiten Schaltzustand verschiebbare Schaltoptik, wie z.B. eine Fokussierlinse, auf, die im ersten Schaltzustand das Werkstück und im zweiten Schaltzustand das optische Element auf den Detektor abbildet. Im ersten Schaltzustand befindet sich das Werkstück und im zweiten Schaltzustand das optische Element im jeweiligen Fokus- bzw. Arbeitsabstand der verschiebbaren Schaltoptik.

In einer weiteren bevorzugten Ausführungsform der Erfindung weist die Abbildungsoptik eine fokusvariable Schaltoptik auf, die zwischen einer ersten Brennweite des ersten Schaltzustands und einer zweiten Brennweite des zweiten Schaltzustands schaltbar ist. Im ersten Schaltzustand befindet sich das Werkstück und im zweiten Schaltzustand das optische Element im jeweiligen Fokus- bzw. Arbeitsabstand der fokusvariablen Schaltoptik. Die fokusvariable Schaltoptik kann beispielsweise als eine fokusvariable Linse ("Quetschlinse") ausgeführt sein; dies ist eine Linse, bei der man die Brennweite ändern kann. Die fokusvariable Linse kann im Strahlengang der rücklaufenden Bildstrahlen an einer ortsfesten Position stehen.

In einer vorteilhaften Weiterbildung dieser Ausführungsformen weist die Abbildungsoptik zusätzlich zu der Schaltoptik eine im Strahlengang der rücklaufenden Bildstrahlen zwischen dem Strahlteiler und dem Detektor angeordnete Detektoroptik auf, die im ersten und im zweiten Schaltzustand, ggf. zusammen mit der Schaltoptik, die vom Werkstück bzw. vom optischen Element kommenden Bildstrahlen auf den Detektor abbildet. Die Detektoroptik kann beispielsweise durch eine feststehende Optik, insbesondere eine Fokussierlinse, mit einer festen Brennweite gebildet sein. Alternativ kann die Detektoroptik auch durch eine fokusvariable oder entlang des Strahlengangs der rücklaufenden Bildstrahlen verschiebbare Optik, insbesondere Fokussierlinse, gebildet sein, die im ersten Schaltzustand die Abbildung des Werkstücks auf den Detektor und/oder im zweiten Schaltzustand die Abbildung des optischen Elements auf den Detektor scharfstellt.

Vorteilhaft weist die Laserbearbeitungsmaschine einen insbesondere elektrischen Stellantrieb zum Umschalten der Schaltoptik zwischen dem ersten und dem zweiten Schaltzustand auf.

Vorzugsweise ist das optische Element das im Strahlengang des Laserstrahls letzte Element vor dem Werkstück, also z.B. ein Schutzglas. Im zweiten Schaltzustand der Abbildungsoptik wird insbesondere die dem Werkstück zugewandte, verschmutzungskritische Außenfläche des Schutzglases von einer an den Detektor angeschlossenen Bildverarbeitungseinheit auf Verschmutzungen überwacht.

Vorzugsweise ist im Strahlengang des Laserstrahls dem Strahlteiler ein Scanner zum 1- oder 2-dimensionalen Ablenken des Laserstrahls nachgeordnet. Falls bei größeren Auslenkwinkeln die Abbildung des Werkstücks oder des optischen Elements nicht scharf wäre, kann durch die fokusvariable oder entlang des Strahlengang der rücklaufenden Bildstrahlen verschiebbare Schalt- oder Detektoroptik die Beobachtungsebene, welche der Detektor in dem ersten oder dem zweiten Schaltzustand scharf sieht, in die Ebene des Werkstücks oder des optischen Elements eingestellt werden.

Die Erfindung betrifft in einem weiteren Aspekt auch ein Verfahren zum Beobachten eines Werkstücks bei der Laserbearbeitung und zum Überwachen eines im Laserstrahlengang angeordneten optischen Elements, wobei mittels einer zwischen einem ersten und einem zweiten Schaltzustand umschaltbaren Abbildungsoptik in dem ersten Schaltzustand die vom Werkstück ausgehenden und vom Strahlengang des einfallenden Laserstrahls getrennten Bildstrahlen zur Beobachtung des Werkstücks auf einen Detektor abgebildet werden und in dem zweiten Schaltzustand die vom optischen Element ausgehenden und vom Strahlengang des einfallenden Laserstrahls getrennten Bildstrahlen zur Überwachung des optischen Elements auf den Detektor abgebildet werden.

Weitere Vorteile und vorteilhafte Ausgestaltungen des Gegenstands der Erfindung sind der Beschreibung, den Zeichnungen und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: schematisch eine erste Ausführungsform der erfindungsgemäßen Laserbearbeitungsmaschine mit einer beweglichen Schaltoptik, die zwischen einem in Fig. 1a gezeigten, ersten Schaltzustand und einem in Fig. 1b gezeigten, zweiten Schaltzustand bewegbar ist;
- Fig. 2: schematisch eine zweite Ausführungsform der erfindungsgemäßen Laserbearbeitungsmaschine mit einer fokusvariablen Schaltoptik, die zwischen einer ersten Brennweite eines ersten Schaltzustands und einer zweiten Brennweite eines zweiten Schaltzustands schaltbar ist; und
- Fig. 3: schematisch eine dritte Ausführungsform der erfindungsgemäßen Laserbearbeitungsmaschine mit einer zwischen einem ersten und einem zweiten Schaltzustand verschiebbaren Schaltoptik.

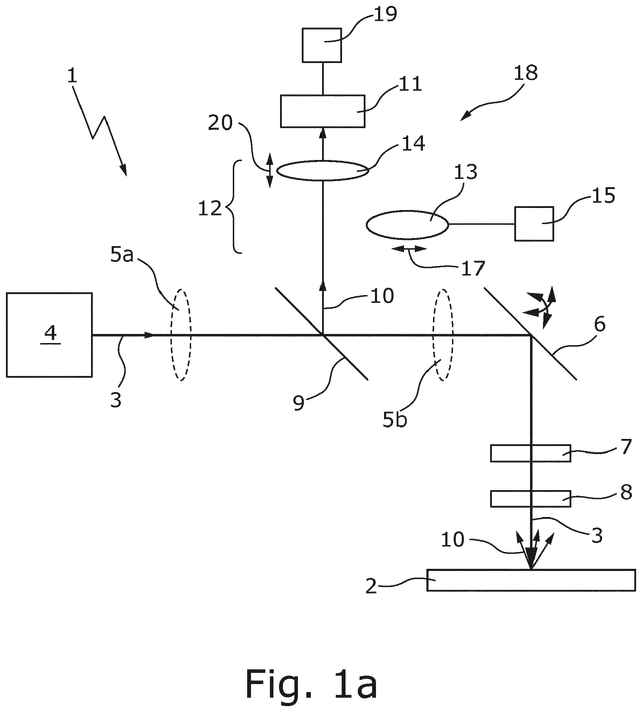

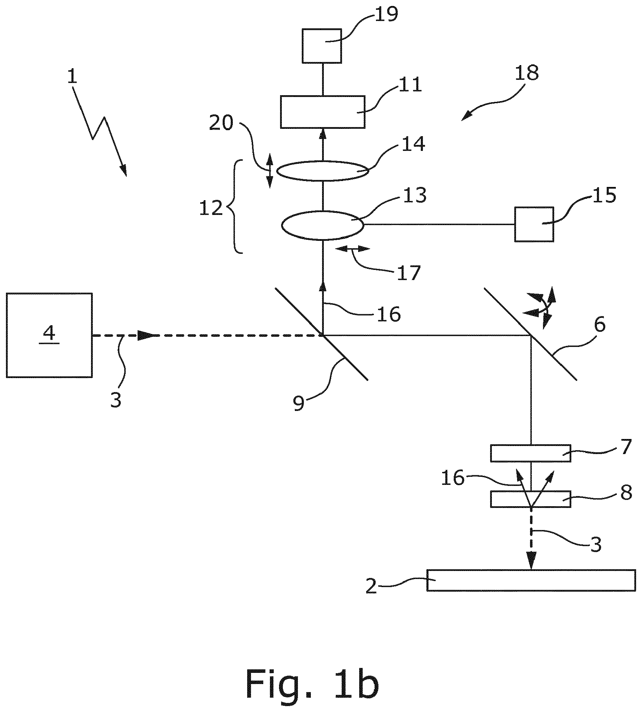

Die in **Fign. 1a****,** **1b** schematisch gezeigte Laserbearbeitungsmaschine **1** dient zum Bearbeiten eines Werkstücks **2** mittels eines Laserstrahls **3.**

Die Laserbearbeitungsmaschine 1 weist einen Laserstrahlerzeuger **4** zum Erzeugen des Laserstrahls 3 und eine F-Theta-Linse **7** (Brennweite von z.B. 250 mm) zum Fokussieren des Laserstrahls 3 auf das Werkstück 2 auf. Optional kann der F-Theta-Linse 7 ein Scanner (z.B. ein um eine oder zwei Achsen verschwenkbarer Scannerspiegel) **6** zum 1- oder 2-dimensionalen Ablenken des Laserstrahls 3 vorgeordnet sein. Der F-Theta-Linse 7 ist ein Schutzglas **8** als letztes optisches Element vor dem Werkstück 2 nachgeordnet, durch das hindurch der Laserstrahl 3 auf das Werkstück 2 gerichtet wird. Das Schutzglas 8 schützt die F-Theta-Linse 7 vor Spritzern und Rauch, die bei der Laserbearbeitung des Werkstücks 2 entstehen können.

Statt der gezeigten F-Theta-Linse 7 könnten, wie in Fig. 1a gestrichelt angedeutet, alternativ vor dem Scanner 6 auch eine Fokussierlinse **5a** und eine variable (verschiebbare oder fokusvariable) Linse **5b** eingesetzt werden, um je nach Scannerstellung den Laserstrahl 3 in die Ebene des Werkstücks 2 abzubilden. In diesem Fall schützt das Schutzglas 8 den Scanner 6 vor Spritzern und Rauch, die bei der Laserbearbeitung des Werkstücks 2 entstehen können.

Zwischen Laserstrahlerzeuger 4 und Scanner 6 ist ein Strahlteiler **9** angeordnet, um vom Werkstück 2 und auch vom Schutzglas 8 ausgehende, rücklaufende Bildstrahlen **10, 16** von dem Strahlengang des einfallenden Laserstrahls 3 zu trennen. Ein z.B. als Kamera ausgebildeter Detektor **11** ist im Strahlgang der Bildstrahlen 10, 16 dem Strahlteiler 9 nachgeordnet. Zwischen dem Strahlteiler 9 und dem Detektor 11 ist eine Abbildungsoptik **12** angeordnet, die eine Schaltoptik **13,** hier lediglich beispielhaft in Form einer Fokussierlinse (Brennweite z.B. 120mm), sowie eine Detektoroptik **14,** hier lediglich beispielhaft in Form einer Fokussierlinse (Brennweite z.B. 100mm), aufweist. Die Schaltoptik 13 ist mittels eines z.B. motorisierten Stellantriebs **15** zwischen einem in Fig. 1a gezeigten, ersten Schaltzustand und einem in Fig. 1b gezeigten, zweiten Schaltzustand bewegbar, insbesondere verdrehbar oder verschiebbar (Doppelpfeil **17**). In dem ersten Schaltzustand greift die Schaltoptik 13 nicht in den Strahlengang der Bildstrahlen 10, 16 ein, und die Detektoroptik 14 bildet das Werkstück 2 auf den Detektor 11 ab. In dem zweiten Schaltzustand greift die Schaltoptik 13 hingegen in den Strahlengang der Bildstrahlen 10, 16 ein und bildet, vorzugsweise bei ausgeschaltetem Laserstrahl 3, zusammen mit der Detektoroptik 14 das Schutzglas 8, insbesondere die dem Werkstück 2 zugewandte, verschmutzungskritische Außenfläche des Schutzglases 8, auf den Detektor 11 ab. Die Schaltoptik 13 bildet zusammen mit dem Detektor 11 eine Überwachungseinrichtung **18** zum Überwachen des Schutzglases 8. Der Verschmutzungsgrad kann von einer an den Detektor 11 angeschlossenen, optionalen Bildverarbeitungseinheit **19** der Überwachungseinrichtung 18 bestimmt werden.

Fig. 1a zeigt den Standardfall, dass man das Werkstück 2 beobachten will. Das Werkstück 2 befindet sich im Arbeitsabstand der Detektoroptik 14, welche die vom Werkstück 2 ausgehenden Bildstrahlen 10 auf den Detektor 11 fokussiert. In Fig. 1b wurde die Schaltoptik 13 in den Strahlengang der Bildstrahlen 16 des Schutzglases 8 bewegt. Das Schutzglas 8 befindet sich nun im Arbeitsabstand der Schalt- und Detektoroptiken 13, 14, welche die vom Schutzglas 8 ausgehenden Bildstrahlen 16 auf den Detektor 11 fokussieren.

Die Detektoroptik 14 ist optional in Richtung der optischen Achse (Doppelpfeil **20**) verschiebbar, um die Beobachtungsebene, welche der Detektor 11 scharf sieht, für die vom Werkstück 2 ausgehenden Bildstrahlen 10 und/oder für die vom Schutzglas 8 ausgehenden Bildstrahlen 16 einzustellen. Statt verschiebbar kann die Detektoroptik 14 alternativ auch als ortsfest angeordnete, fokusvariable Fokussierlinse ausgebildet sein, um die Beobachtungsebene, welche der Detektor 11 scharf sieht, einzustellen.

Mit dem Scanner 6 kann die dem Werkstück 2 zugewandte, verschmutzungskritische Außenfläche des Schutzglases 8 abgescannt werden, und zwar genau die Fläche, die auch bei der Laserbearbeitung, z.B. beim Beschriften, des Werkstücks 2 abgescannt wird. Falls bei größeren Auslenkwinkeln die Abbildung des Schutzglases 8 nicht scharf wäre, kann durch Verschieben der verschiebbaren Detektoroptik 12 - im Falle einer fokusvariablen Detektoroptik 12 durch Ändern der Brennweite - die Abbildung auch in diesem Bereich scharf gestellt werden.

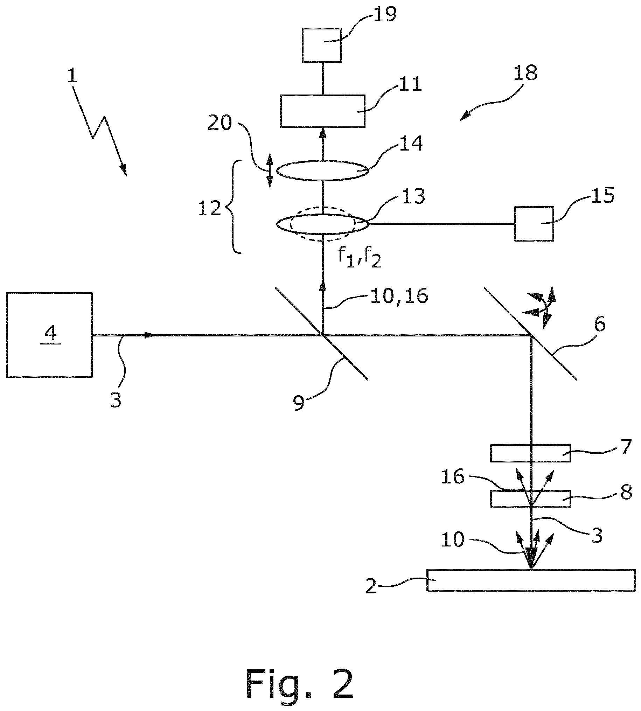

Von der Laserbearbeitungsmaschine der Fign. 1a, 1b unterscheidet sich die in **Fig. 2** gezeigte Laserbearbeitungsmaschine 1 dadurch, dass hier die Abbildungsoptik 12 eine fokusvariable Schaltoptik 13, hier lediglich beispielhaft in Form einer fokusvariablen Fokussierlinse, aufweist, die zwischen einer ersten Brennweite **f1** des ersten Schaltzustands und einer zweiten Brennweite **f2** des zweiten Schaltzustands schaltbar ist. In dem ersten Schaltzustand bilden die Schaltoptik 13 mit Brennweite f1 und die Detektoroptik 14 das Werkstück 2 auf den Detektor 11 ab. In dem gestrichelt dargestellten zweiten Schaltzustand bilden die Schaltoptik 13 mit Brennweite f2 und die Detektoroptik 14, vorzugsweise bei ausgeschaltetem Laserstrahl 3 das Schutzglas 8, insbesondere die dem Werkstück 2 zugewandte, verschmutzungskritische Außenfläche des Schutzglases 8, auf den Detektor 11 ab. Ist der Brennweitenbereich der fokusvariablen Schaltoptik 13 groß genug, kann die fokusvariable Schaltoptik 13 auch die Funktion der Detektoroptik 14 übernehmen, die dann entfallen kann.

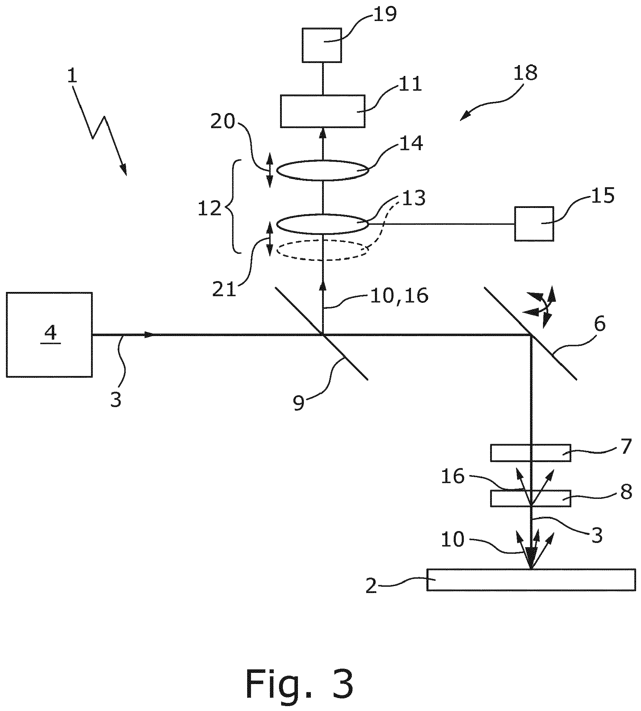

Von der Laserbearbeitungsmaschine der Fign. 1a, 1b unterscheidet sich die in **Fig. 3** gezeigte Laserbearbeitungsmaschine 1 dadurch, dass hier die Abbildungsoptik 12 eine entlang des Strahlengangs der rücklaufenden Bildstrahlen 10, 16 zwischen dem ersten und dem zweiten Schaltzustand in Doppelfeilrichtung **21** verschiebbare Schaltoptik 13 aufweist, hier lediglich beispielhaft in Form einer verschiebbaren Fokussierlinse. In dem ersten Schaltzustand bilden die Schaltoptik 13 und die Detektoroptik 14 das Werkstück 2 auf den Detektor 11 ab. In dem gestrichelt dargestellten zweiten Schaltzustand bilden die verschobene Schaltoptik 13 und die Detektoroptik 14, vorzugsweise bei ausgeschaltetem Laserstrahl 3 das Schutzglas 8, insbesondere die dem Werkstück 2 zugewandte, verschmutzungskritische Außenfläche des Schutzglases 8, auf den Detektor 11 ab. Ist der Verschiebebereich der verschiebbaren Schaltoptik 13 groß genug, kann die verschiebbare Schaltoptik 13 auch die Funktion der Detektoroptik 14 übernehmen, die dann entfallen kann.

## Patentansprüche

1. Laserbearbeitungsmaschine (1) zum Bearbeiten eines Werkstücks (2) mittels eines Laserstrahls (3), mit einem Laserstrahlerzeuger (4) zum Erzeugen des Laserstrahls (3), mit einem optischen Element (8), durch das hindurch der Laserstrahl (3) auf das Werkstück (2) gerichtet wird, mit einem Strahlteiler (9), der zwischen dem Laserstrahlerzeuger (4) und dem optischen Element (8) angeordnet ist, um rücklaufende Bildstrahlen (10, 16) von dem Strahlengang des einfallenden Laserstrahls (3) zu trennen, mit einem Detektor (11), der im Strahlgang der rücklaufenden Bildstrahlen (10, 16) dem Strahlteiler (9) nachgeordnet ist, mit einer Abbildungsoptik (12), die zwischen dem Strahlteiler (9) und dem Detektor (11) angeordnet ist, und mit einer Überwachungseinrichtung (18) zum Überwachen des optischen Elements (8),
**dadurch gekennzeichnet,**
**dass** die Abbildungsoptik (12) zwischen einem ersten Schaltzustand, in dem das Werkstück (2) auf den Detektor (11) abgebildet wird, und einem zweiten Schaltzustand, in dem das optische Element (8) auf den Detektor (11) abgebildet wird, umschaltbar ist und dass der Detektor (11) Teil der Überwachungseinrichtung (18) ist.

2. Laserbearbeitungsmaschine nach Anspruch 1, **dadurch gekennzeichnet, dass** die Abbildungsoptik (12) eine zwischen dem ersten und dem zweiten Schaltzustand bewegbare Schaltoptik (13), insbesondere Fokussierlinse, aufweist, die in einem der beiden Schaltzustände nicht in den Strahlengang der rücklaufenden Bildstrahlen (10, 16) eingreift und in dem anderen Schaltzustand in den Strahlengang der rücklaufenden Bildstrahlen (10, 16) eingreift.

3. Laserbearbeitungsmaschine nach Anspruch 2, **dadurch gekennzeichnet, dass** das Bewegen der Schaltoptik (13) zwischen dem ersten und dem zweiten Schaltzustand durch Verdrehen oder Verschieben der Schaltoptik (13) erfolgt.

4. Laserbearbeitungsmaschine nach Anspruch 1, **dadurch gekennzeichnet, dass** die Abbildungsoptik (12) eine entlang des Strahlengangs der rücklaufenden Bildstrahlen (10, 16) zwischen dem ersten und dem zweiten Schaltzustand verschiebbare Schaltoptik (13), insbesondere Fokussierlinse, aufweist.

5. Laserbearbeitungsmaschine nach Anspruch 1, **dadurch gekennzeichnet, dass** die Abbildungsoptik (12) eine fokusvariable Schaltoptik (13), insbesondere fokusvariable Linse, aufweist, die zwischen einer ersten Brennweite (f1) des ersten Schaltzustands und einer zweiten Brennweite (f2) des zweiten Schaltzustands schaltbar ist.

6. Laserbearbeitungsmaschine nach einem der Ansprüche 2 bis 5, **dadurch gekennzeichnet, dass** die Abbildungsoptik (12) zusätzlich zu der Schaltoptik (13) eine im Strahlengang der rücklaufenden Bildstrahlen (10, 16) zwischen dem Strahlteiler (9) und dem Detektor (11) angeordnete Detektoroptik (14) aufweist, die im ersten und im zweiten Schaltzustand, ggf. zusammen mit der Schaltoptik (13), die vom Werkstück (2) bzw. vom optischen Element (8) kommenden Bildstrahlen (10, 16) auf den Detektor (11) abbildet.

7. Laserbearbeitungsmaschine nach Anspruch 6, **dadurch gekennzeichnet, dass** die Detektoroptik (14) durch eine feststehende Optik, insbesondere eine Fokussierlinse, mit einer festen Brennweite gebildet ist.

8. Laserbearbeitungsmaschine nach Anspruch 6, **dadurch gekennzeichnet, dass** die Detektoroptik (14) durch eine fokusvariable oder entlang des Strahlengangs der rücklaufenden Bildstrahlen (10, 16) verschiebbare Optik, insbesondere Fokussierlinse, gebildet ist, die im ersten Schaltzustand die Abbildung des Werkstücks (2) auf den Detektor (11) und/oder im zweiten Schaltzustand die Abbildung des optischen Elements (8) auf den Detektor (11) scharfstellt.

9. Laserbearbeitungsmaschine nach einem der Ansprüche 2 bis 8, **gekennzeichnet durch** einen insbesondere elektrischen Stellantrieb (15) zum Umschalten der Schaltoptik (13) zwischen dem ersten und dem zweiten Schaltzustand.

10. Laserbearbeitungsmaschine nach einem der vorhergehenden Ansprüche, **dadurch gekennzeichnet, dass** das optische Element (8) das im Strahlengang des Laserstrahls (3) letzte Element vor dem Werkstück (2) ist.

11. Laserbearbeitungsmaschine nach einem der vorhergehenden Ansprüche, **dadurch gekennzeichnet, dass** das optische Element (8) ein Schutzglas ist.

12. Laserbearbeitungsmaschine nach einem der vorhergehenden Ansprüche, **dadurch gekennzeichnet, dass** im Strahlengang des Laserstrahls (3) dem Strahlteiler (9) ein Scanner (6) zum 1- oder 2-dimensionalen Ablenken des Laserstrahls (3) nachgeordnet ist.

13. Verfahren zum Beobachten eines Werkstücks (2) bei der Laserbearbeitung und zum Überwachen eines im Laserstrahlengang angeordneten optischen Elements (8), wobei mittels einer zwischen einem ersten und einem zweiten Schaltzustand umschaltbaren Abbildungsoptik (12) in dem ersten Schaltzustand die vom Werkstück (2) ausgehenden und vom Strahlengang des einfallenden Laserstrahls (3) getrennten Bildstrahlen (10) zur Beobachtung des Werkstücks (2) auf einen Detektor (11) abgebildet werden und in dem zweiten Schaltzustand die vom optischen Element (8) ausgehenden und vom Strahlengang des einfallenden Laserstrahls (3) getrennten Bildstrahlen (16) zur Überwachung des optischen Elements (8) auf den Detektor (11) abgebildet werden.
